# EUROPEAN PATENT APPLICATION

(11) **EP 4 786 647 A1**
(43) Date of publication of application: **05.08.2026**
(21) Application number: 24872527.7
(22) Date of filing: 27.09.2024
(51) Int. Cl.: C23C 26/00, H01M 50/505, H01M 50/522, H01M 50/524, H01M 50/526, H01R 4/58

(54) **COMPOSITE MEMBER**

(30) Priority: 29.09.2023 JP 2023170685
(71) Applicant: Ibiden Co., Ltd, Ogaki-shi, Gifu 503-8604 (JP)
(72) Inventor: GOTO, Shinnosuke, Ibi-gun, Gifu 501-0695 (JP); USHIDA, Takeshi, Ibi-gun, Gifu 501-0695 (JP)
(74) Representative: Hoffmann Eitle
(86) International application number: PCT/JP2024/034705
(87) International publication number: WO 2025/070746

(57) **Abstract**

To provide a composite member that does not require a winding operation, that can easily cope with a complicated shape, that can suppress occurrence of burning off or peeling off of an insulating film even in the case of being heated at a high temperature, and that can maintain an excellent insulating property and heat resistance. A composite member (1) includes a metal substrate (2) and an insulating film (3) covering at least a part of a surface of the substrate (2). The insulating film (3) contains a matrix (10) containing a compound having a siloxane bond and an inorganic material (20) dispersed in the matrix. The substrate (2) and the insulating film (3) are in contact with each other at room temperature. An adhesive layer (8) is formed between the substrate (2) and the insulating film (3) in the case of performing heating to a temperature equal to or higher than an oxidation start temperature of the metal constituting the substrate (2). The adhesive layer (8) contains a metal element contained in the substrate (2), a metal oxide of the metal element, the inorganic material (20), and at least one kind selected from silicone and silica.

## Description

### TECHNICAL FIELD

The present invention relates to a composite member in which a substrate is covered with an insulating film.

### BACKGROUND ART

In order to electrically connect components, a conductive member in which an insulating film is formed on a surface of a metal piece is used. For example, various electronic devices, electric vehicles or hybrid vehicles driven by an electric motor, storage batteries, and the like are mounted with a power storage device in which a plurality of battery cells are connected in series or in parallel by a bus bar, which is a conductive member. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulating property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, an operation of winding the ceramic tape around the bus bar body is required. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, no sufficient insulating property and heat resistance can be obtained. It is also assumed that an adhesive surface of the ceramic tape is peeled off. Further, although a nylon tape is wound as an insulating layer on an outer side of the mica tape, the nylon tape is weak against heat and has a problem in heat resistance. In particular, in the case where a flame is generated near the bus bar or the like, an insulating layer formed around the bus bar body is immediately burned off.

Therefore, an object of the present invention is to provide a composite member that has an excellent insulating property and heat resistance, that does not require a winding operation such as that for a ceramic tape, that has no problems with winding unevenness, a gap, or peeling off, that can easily cope with a complicated shape, that can suppress occurrence of burning off or peeling off of an insulating film even in the case of being heated at a high temperature, and that can maintain an excellent insulating property and heat resistance.

### SOLUTION TO PROBLEM

The above object of the present invention is achieved by the following configuration [1] or [2] relating to a composite member.
[1] A composite member including:
   a metal substrate; and
   an insulating film covering at least a part of a surface of the substrate, in which
   the insulating film contains a matrix containing a compound having a siloxane bond and an inorganic material dispersed in the matrix,
   the substrate and the insulating film are in contact with each other at room temperature,
   an adhesive layer is formed between the substrate and the insulating film in a case of performing heating to a temperature equal to or higher than an oxidation start temperature of the metal constituting the substrate, and
   the adhesive layer contains a metal element contained in the substrate, a metal oxide of the metal element, the inorganic material, and at least one kind selected from silicone and silica.
[2] A composite member including:
   a metal substrate;
   an insulating film covering at least a part of a surface of the substrate; and
   an adhesive layer formed between the substrate and the insulating film, in which the insulating film contains a matrix containing a compound having a siloxane bond and an inorganic material dispersed in the matrix, and
   the adhesive layer contains a metal element contained in the substrate, a metal oxide of the metal element, the inorganic material, and at least one kind selected from silicone and silica.
   In addition, preferred embodiments of the present invention relating to the composite member relate to the following [3] to [18].
[3] The composite member according to [1] or [2], in which the insulating film has a pore that communicates an outside with the surface of the substrate.
[4] The composite member according to any one of [1] to [3], in which the insulating film has a thickness of 150 µm or more.
[5] The composite member according to any one of [1] to [4], in which a surface layer consisting of a material of the matrix is provided on at least a part of a surface of the insulating film.
[6] The composite member according to [5], in which the surface layer has a thickness of 10 µm or more and 100 µm or less.
[7] The composite member according to any one of [1] to [6], in which
   the insulating film includes a first film containing the matrix and the inorganic material and a second film consisting of a material of the matrix, and
   a plurality of the first films and a plurality of the second films are alternately stacked in this order from a substrate side.
[8] The composite member according to [7], in which each of the second films has a thickness of 10 µm or more and 100 µm or less.
[9] The composite member according to any one of [1] to [8], in which a resin layer containing a resin different from a material of the matrix is provided on at least a part of a surface of the insulating film.
[10] The composite member according to [9], in which the resin layer has a thickness of 100 µm or more and 600 µm or less.
[11] The composite member according to any one of [1] to [10], in which the compound having the siloxane bond is at least one of silicone and silica sol.
[12] The composite member according to any one of [1] to [11], in which the inorganic material includes at least one kind selected from silica, alumina, mullite, and zirconia.
[13] The composite member according to any one of [1] to [11], in which the inorganic material includes at least one kind selected from a glass-based material, mica, kaolin, talc, clay, pyrophyllite, montmorillonite, bentonite, wollastonite, xonotlite, zeolite, diatomaceous earth, and halloysite.
[14] The composite member according to [13], in which the adhesive layer contains 18 mass% or more and 22 mass% or less of oxygen, 5 mass% or less of magnesium, 5 mass% or less of aluminum, 8 mass% or more and 12 mass% or less of silicon, 5 mass% or less of potassium, and 50 mass% or more and 70 mass% or less of copper.
[15] The composite member according to any one of [1] to [14], in which the inorganic material includes at least one kind selected from a flaky inorganic material, a fibrous inorganic material, and a particulate inorganic material.
[16] The composite member according to any one of [1] to [11], in which the inorganic material includes at least one of a flaky glass-based material and mica.
[17] The composite member according to any one of [1] to [16], in which the substrate is a bus bar that connects a plurality of battery cells or battery modules.
[18] The composite member according to any one of [1] to [16], in which the substrate is a connector, a protective component for a battery module, a case of an electronic component, a battery cell, a battery module, a battery pack, or a coil of a motor.

### ADVANTAGEOUS EFFECTS OF INVENTION

In the composite member according to the present invention, since the insulating film covering at least a part of the substrate contains the compound having the siloxane bond and the inorganic material, excellent heat resistance and insulating property can be obtained. In addition, since the composite member according to the present invention has a structure in which the substrate and the insulating film are in contact with each other at room temperature, and the adhesive layer is formed between the substrate and the insulating film in the case of performing heating to a temperature equal to or higher than the oxidation start temperature of the metal constituting the substrate, or the adhesive layer is formed in advance at room temperature, even in the case where a flame is generated near the composite member, the occurrence of burning off or peeling off of the insulating film can be suppressed, and the heat resistance and the insulating property can be maintained.

### BRIEF DESCRIPTION OF DRAWINGS

[Fig. 1] Fig. 1 is a photograph substituted for a drawing showing a cross section of a composite member according to the present embodiment taken using SEM.
[Fig. 2] Fig. 2 is a photograph substituted for a drawing showing the cross section of the composite member according to the present embodiment taken using SEM after heating at 1,000°C.
[Fig. 3] Fig. 3 is an enlarged view showing a portion of Fig. 2.
[Fig. 4] Fig. 4 is a photograph substituted for a drawing of the composite member heated at 1,000°C shown in Fig. 2 taken using an optical microscope.
[Fig. 5] Fig. 5 is a photograph substituted for a drawing showing a composite member according to another embodiment of the present invention.
[Fig. 6] Fig. 6 is a perspective view showing a bus bar to which the composite member according to the present embodiment is applied.
[Fig. 7A] Fig. 7A is a diagram showing a method for producing the composite member according to the embodiment of the present invention in order of steps, and is a schematic diagram showing a application Step for the first time.
[Fig. 7B] Fig. 7B is a diagram showing the method for producing the composite member according to the present embodiment in order of steps, and is a schematic diagram showing an immersion step for the first time.
[Fig. 7C] Fig. 7C is a diagram showing the method for producing the composite member according to the present embodiment in order of steps, and is a schematic diagram showing the application step for the second time.
[Fig. 7D] Fig. 7D is a diagram showing the method for producing the composite member according to the present embodiment in order of steps, and is a schematic diagram showing the immersion step for the second time.
[Fig. 8A] Fig. 8A is a diagram showing a method for producing a composite member according to another embodiment of the present invention in order of steps, and is a schematic diagram showing a application step for the first time.
[Fig. 8B] Fig. 8B is a diagram showing the method for producing the composite member according to the another embodiment of the present invention in order of steps, and is a schematic diagram showing an immersion step for the first time.
[Fig. 8C] Fig. 8C is a diagram showing the method for producing the composite member according to the another embodiment of the present invention in order of steps, and is a schematic diagram showing the application step for the second time.
[Fig. 8D] Fig. 8D is a diagram showing the method for producing the composite member according to the another embodiment of the present invention in order of steps, and is a schematic diagram showing the immersion step for the second time.

### DESCRIPTION OF EMBODIMENTS

The present inventors have conducted intensive studies to obtain a composite member capable of solving the above problems without using an insulating tape such as a ceramic tape. As a result, the present inventors have found that it is possible to easily cope with a complicated shape by covering a surface of a substrate with a material of an insulating film and forming the insulating film covering the surface of the substrate. However, simply covering the surface of the substrate with the material of the insulating film and curing the material to form the insulating film may burn off the insulating film in the case where a flame is generated near the composite member, and it is difficult to maintain an insulating property.

Therefore, the present inventors have focused on a region where a metal substrate and an insulating film are bonded to each other, and have found that in the case where an adhesive layer having a specific component is formed in this region, the insulating film can maintain the insulating property without peeling off even when a flame is generated. The present invention has been made based on the above findings.

Hereinafter, embodiments of the present invention will be described in detail with reference to the drawings. Note that, the present invention is not limited to the embodiments described below, and can be freely changed and implemented without departing from the gist of the present invention.

### [Composite Member]

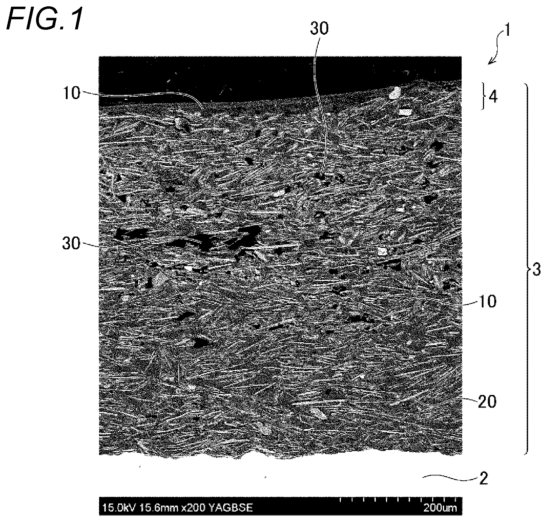

Fig. 1 is a photograph substituted for a drawing of a cross section of a composite member according to the present embodiment taken using a scanning electron microscope (SEM). A composite member 1 includes a metal substrate 2 and an insulating film 3 covering at least a part of a surface of the substrate 2. The insulating film 3 contains a matrix 10 containing a compound having a siloxane bond and an inorganic material 20 dispersed in the matrix 10. Note that, the composite member 1 may include a surface layer 4 consisting of a material of the matrix 10 to be described later on at least a part of a surface of the insulating film 3. In the present embodiment, as shown in Fig. 1, the substrate 2 and the insulating film 3 are in contact with each other at room temperature.

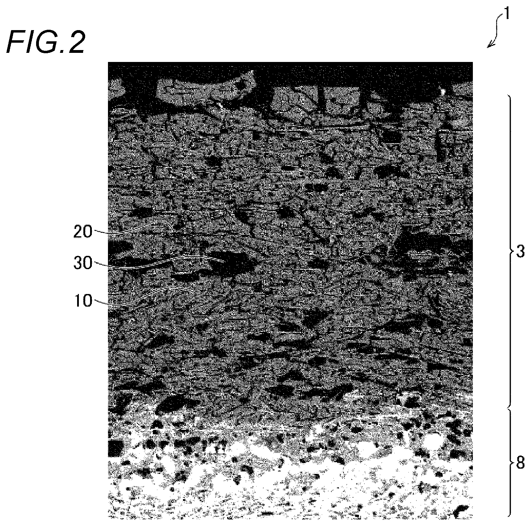

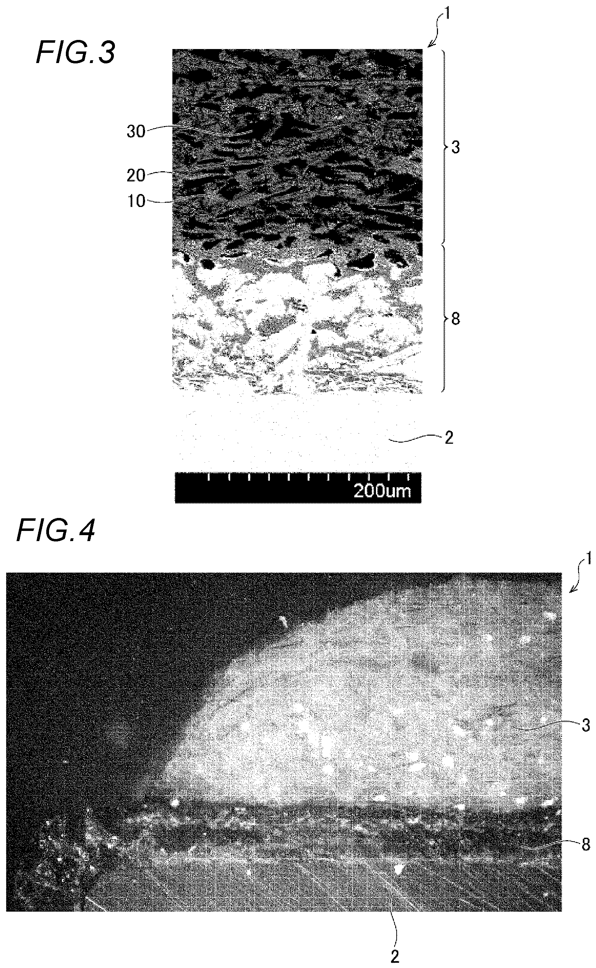

Fig. 2 is a photograph substituted for a drawing showing the cross section of the composite member according to the present embodiment taken using SEM after heating at 1,000°C. Fig. 3 is an enlarged view showing a portion of Fig. 2. Fig. 4 is a photograph substituted for a drawing of the composite member heated at 1,000°C shown in Fig. 2 taken using an optical microscope. In Fig. 2, the substrate 2 is out of the field of view, but an adhesive layer 8 is formed between the substrate 2 and the insulating film 3. Although details will be described later, in the present embodiment, a copper substrate is used as the substrate 2, and mica is used as the inorganic material 20. The adhesive layer 8 contains copper, copper oxide, which is an oxide of copper, mica, and at least one kind selected from silicone and silica. As shown in the enlarged photograph in Fig. 3, the substrate 2 containing copper (copper oxide) as a component and the insulating film 3 containing mica and silicone (silica) are in a fused state in the adhesive layer 8.

In the composite member 1 configured as described above, the insulating property is not imparted by winding a tape around the substrate 2, but the surface of the substrate 2 is covered with the material of the insulating film to form the insulating film 3 in close contact with the substrate 2. Therefore, during the production of the composite member 1 according to the present embodiment, a winding operation is not required, there is no problems with winding unevenness, a gap, or peeling off, and it is possible to easily cope with even a complicated shape. In addition, since the insulating film 3 contains the inorganic material 20 and the matrix 10 containing a compound having a siloxane bond (Si-O-Si bond) such as silicone or silica sol (silica: SiO₂), even in the case where the composite member 1 is exposed to a high temperature, deterioration is less likely to occur, and excellent heat resistance and insulating property can be maintained. Further, in the composite member 1, the substrate 2 and the insulating film 3 are in contact with each other at room temperature, and a firm adhesive layer 8 in which the component of the substrate 2 and the component of the insulating film 3 are fused is formed by heating at a high temperature. Therefore, in the case where a flame is generated near the composite member 1, it is possible to suppress the insulating film 3 from being immediately peeled off from the substrate 2 and the surface of the substrate 2 from being exposed, and it is possible to maintain the heat resistance and the insulating property by the insulating film 3.

Hereinafter, the insulating film 3, the substrate 2, the adhesive layer 8, the surface layer 4, and the like of the composite member 1 according to the present embodiment will be described in detail.

### <Insulating Film>

The insulating film 3 contains the matrix 10 containing a compound having a siloxane bond and the inorganic material 20 dispersed in the matrix 10. Since both the compound having the siloxane bond and the inorganic material 20 are materials having excellent heat resistance and insulating property, when the compound having the siloxane bond and the inorganic material 20 are contained as the components of the insulating film 3, an insulating film having excellent heat resistance and insulating property can be obtained. In addition, a plurality of pores 30 are formed inside the insulating film 3.

Note that, examples of the compound having the siloxane bond (Si-O-Si bond) include silicone and silica sol (silica: SiO₂). From the viewpoint of excellent heat resistance and insulating property, the compound having the siloxane bond contained in the matrix 10 is preferably at least one of silicone and silica sol, and more preferably silicone. It is also preferable that the matrix 10 contains both silicone and silica sol.

Note that, in the present embodiment, a thickness of the insulating film 3 is preferably appropriately defined as follows.

### (Thickness of Insulating Film)

When the thickness of the insulating film 3 is 150 µm or more, a strength of the insulating film 3 can be ensured, and the occurrence of peeling off can be suppressed, so that a desired insulating property can be obtained. Therefore, the thickness of the insulating film 3 is preferably 150 µm or more, and more preferably 200 µm or more. On the other hand, as the thickness of the insulating film 3 increases, the strength of the insulating film 3 is improved, and thus the upper limit of the thickness is not particularly limited, but when the thickness is excessively increased, it is difficult to control a size of the composite member 1, and a production cost also increases. In addition, peeling off easily occurs. Therefore, the thickness of the insulating film 3 is preferably 800 µm or less, and more preferably 600 µm or less.

Hereinafter, the material constituting the insulating film in the composite member 1 according to the present embodiment will be described in more detail.

### (Compound Having Siloxane Bond: Silicone)

Silicone, which is a preferred example of the compound having the siloxane bond contained in the matrix 10 of the insulating film 3, is heated in a coating material curing step in a production method to be described later, whereby functional groups disappear and a SiO bond is generated. In addition, when a flame or the like is generated near the composite member and the insulating film is heated to a temperature of, for example, 700°C or higher, SiO₂ is generated by thermal decomposition. Then, since SiO₂ is not burned out even when subjected to a flame, the insulating film 3 containing silicone can have excellent heat resistance. Note that, the silicone may be either a silicone resin or a silicone rubber, and it is preferable to use a silicone resin from the viewpoint of increasing a density of SiO₂ to be formed.

### (Inorganic Material)

Since the inorganic material 20 has a high melting point and excellent heat resistance, the heat resistance of the insulating film 3 can be further improved by containing the inorganic material 20 in the insulating film 3. In addition, since the inorganic material 20 can also act as a framework in the insulating film 3, the strength of the insulating film 3 can be improved.

The inorganic material 20 preferably contains a silicate compound. As described above, silicone, which is an example of the compound having the siloxane bond, can be changed into SiO₂ by thermal decomposition, but since the silicate compound has the same component as SiO₂ formed by silicone, a bonding force between the matrix 10 containing silicone and the inorganic material 20 can be improved. Note that, the silicate compound preferably includes at least one kind selected from a glass-based material, mica, kaolin, talc, clay, pyrophyllite, montmorillonite, bentonite, wollastonite, xonotlite, zeolite, diatomaceous earth, and halloysite.

Note that, since a main component of silica sol (silica), which is another preferred example of the compound having the siloxane bond, is SiO₂ and the silicate compound has the same component as the silica sol (SiO₂), the bonding force between the matrix 10 containing the silica sol (silica) and the inorganic material 20 can also be improved.

In addition, the inorganic material 20 also preferably includes at least one kind selected from silica, alumina, mullite, and zirconia. Since the above material has a high melting point and a high insulating property, the heat resistance and the insulating property of the insulating film 3 can be further improved by containing these materials in the insulating film 3. Note that, in the case of applying a bus bar as an example of the composite member according to the present invention, a heat exposure temperature assumed for the bus bar is equal to or higher than a melting point of a metal material used for a general bus bar body. In the present embodiment, when silica, alumina, mullite, zirconia, or the like is contained as the inorganic material 20, since these materials have a melting point equal to or higher than the thermal exposure temperature, it is possible to suppress the bus bar body from being exposed to high heat. Therefore, the above materials are suitably used as the material of the insulating film 3 in the bus bar.

The inorganic material 20 preferably has at least one shape selected from a flaky shape, a fibrous shape, and a particulate shape. When the inorganic material 20 has the shape as described above, an adhesion force between the inorganic material 20 and the matrix 10 is increased when the inorganic material 20 is dispersed in the matrix 10, and the strength of the insulating film 3 can be improved.

In the case of containing a glass-based material as the inorganic material 20, the glass-based material preferably includes at least one kind selected from a flaky glass-based material, a glass particle, and a glass fiber. Among these, the flaky glass-based material is oriented in a planar shape inside the insulating film 3 and exhibits an excellent insulating property and heat resistance. Therefore, it is particularly preferable to contain a flaky glass-based material as the glass-based material. In addition, the mica described above is preferably used as the inorganic material 20 for the same reason as the flaky glass-based material.

A content of the inorganic material 20 with respect to all components in the insulating film 3 is preferably 3 vol% to 70 vol%, more preferably 10 vol% to 50 vol%, and still more preferably 20 vol% to 40 vol%. When the content of the inorganic material 20 is less than 3 vol%, the insulating property and the heat resistance may not be sufficiently obtained. On the other hand, when it is more than 70 vol%, a viscosity of a coating liquid to be subjected to dip coating is too high and a film forming property is poor.

Note that, in addition to the matrix 10 and the inorganic material 20 described above, the insulating film 3 may contain other materials such as a flame retardant, a dispersant, and a pigment as long as the insulating property and the heat resistance are not influenced. In addition, as to be described later, the insulating film 3 is formed by covering the surface of the substrate with a coating material (coating liquid), and it is preferable to contain a thixotropic agent in order to improve a coating performance of the coating liquid containing the material of the matrix 10 and the inorganic material 20.

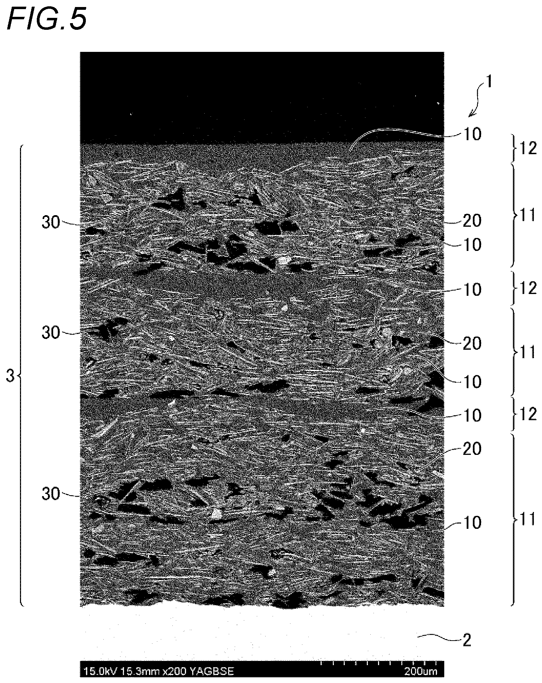

Further, in the present embodiment, the insulating film 3 may have a film other than a film containing the inorganic material 20. Fig. 5 is a photograph substituted for a drawing showing the composite member 1 according to another embodiment of the present invention. In the another embodiment shown in Fig. 5, components that are the same as those shown in Fig. 1 are denoted by the same reference numerals, and detailed description thereof will be omitted or simplified. As shown in Fig. 5, the composite member 1 includes a first film 11 containing the material of the matrix 10 and the inorganic material 20, and a second film 12 consisting of the material of the matrix 10, and a plurality of first films 11 and a plurality of second films 12 are alternately stacked in this order from a substrate 2 side.

Unlike the first film 11, the second film 12 does not contain the inorganic material 20, and consists of the material of the matrix 10. Therefore, high adhesion is obtained between the first film 11 and the second film 12. The second film 12 is a hard and dense layer, and the material of the matrix 10 containing silicone (compound having a siloxane bond) has an excellent insulating property. Therefore, when the second film 12 having a dense structure composed of the material of the matrix 10 is repeatedly stacked, a more excellent insulating property can be obtained.

### <Substrate>

In the present embodiment, the substrate 2 is not particularly limited except that it is composed of a metal, and body portions of various products to which the composite member 1 according to the present embodiment is applied can be used as the substrate 2. For example, in the case of applying a bus bar to be described later as the composite member 1, a bus bar body having conductivity can be used as the substrate 2. Note that, although the bus bar body has conductivity and the substrate itself is energized, in the present embodiment, the substrate 2 covered with the insulating film 3 is not limited to a conductive one. For example, a substrate composed of a non-energized material can also be used.

### <Adhesive Layer>

In the composite member 1 according to the present embodiment, the substrate 2 and the insulating film 3 are in contact with each other at room temperature, and when heating is performed at a high temperature, the adhesive layer 8 is formed between the substrate 2 and the insulating film 3. The adhesive layer 8 is formed by fusing a part of the substrate 2 and a part of the insulating film 3 in the case of performing heating in a state where an oxide of the metal constituting the substrate 2, the silicone constituting the matrix of the insulating film 3, and the inorganic material are present. That is, in the case where the composite member 1 is heated to a temperature equal to or higher than an oxidation start temperature of the metal constituting the substrate 2, the adhesive layer 8 is formed. Therefore, the obtained adhesive layer 8 contains a metal element contained in the substrate 2, a metal oxide of the metal element, the inorganic material 20, and at least one kind selected from silicone and silica. Although details will be described later, when the silicone is heated at a high temperature, silica (SiO₂) is generated, and thus, depending on the heating temperature, the adhesive layer 8 may contain only silicone, may contain silicone and silica, or may contain only silica.

In the case where the copper substrate 2 is used, since a temperature at which oxidation of copper remarkably starts to proceed is about 400°C, the formation of the adhesive layer 8 is started when heating is performed to a temperature of 400°C or higher in an environment in which oxygen for oxidizing copper is present. In addition, in the case where the copper substrate 2 is used, components of the adhesive layer 8 are preferably in the following ranges. That is, the adhesive layer 8 preferably contains 18 mass% or more and 22 mass% or less of oxygen, 5 mass% or less of magnesium, 5 mass% or less of aluminum, 8 mass% or more and 12 mass% or less of silicon, 5 mass% or less of potassium, and 50 mass% or more and 70 mass% or less of copper. Among the above components, magnesium, aluminum, and potassium are components derived from mica. Silicon is a component derived from mica or silicone. Oxygen is a component derived from silica, silicone, or mica. Copper is a component derived from a copper substrate used as the substrate.

Specifically, in the composite member 1 shown in Figs. 2 to 4, a copper substrate is used as the substrate 2, mica is used as the inorganic material 20, and in the adhesive layer, a carbon content is 7.62 mass%, an oxygen content is 19.69 mass%, a magnesium content is 2.61 mass%, an aluminum content is 0.97 mass%, a silicon content is 9.63 mass%, a potassium content is 0.76 mass%, and a copper content is 54.47 mass% with respect to a total mass of the adhesive layer.

Note that, in the present embodiment, after the surface of the substrate 2 is covered with the coating material, the coating material is heated and cured to form the insulating film 3. At this time, when the surface of the metal material constituting the substrate 2 is oxidized in advance, the adhesive layer 8 may also be formed by heating for forming the insulating film 3. Therefore, the present invention includes a case where the adhesive layer 8 has already been formed at room temperature. That is, for example, as shown in Fig. 3, in another embodiment of the present invention, the composite member 1 includes the metal substrate 2, the insulating film 3 covering at least a part of the surface of the substrate 2, and the adhesive layer 8 formed between the substrate 2 and the insulating film 3. In the case where the composite member 1 includes the adhesive layer 8 at room temperature, the components contained in the adhesive layer 8 are similar to those described above. In the present description, the room temperature indicates a temperature at which the composite member is normally used, and is, for example, 25°C.

In addition, in the present embodiment, examples of conditions for forming the adhesive layer 8 include heating at a predetermined temperature and oxidation of the metal constituting the substrate 2. Therefore, even in the case where the composite member 1 is heated to a temperature equal to or higher than the oxidation start temperature of the metal constituting the substrate 2, when oxygen is not present on the surface of the substrate 2, it may be difficult to form the desired adhesive layer 8. Therefore, the pores 30 formed in the insulating film 3 preferably communicate the outside of the composite member 1 with the surface of the substrate 2. In Fig. 1, since one cross section of the composite member 1 is observed, fine pores 30 appear to be independently scattered, but some pores 30 communicate with the surface of the substrate 2 from the outside of the composite member 1. In this manner, when the pores 30 communicating from the outside are present, oxygen easily reaches the surface of the substrate 2, and a metal oxide is generated, so that the adhesive layer 8 is easily formed by heating.

### <Surface Layer>

The composite member 1 may include the surface layer 4 consisting of the material of the matrix 10 on at least a part of the surface of the insulating film 3. Similar to the second film, the surface layer 4 does not contain the inorganic material 20 unlike the insulating film 3, and contains only the material of the matrix 10. Therefore, the surface layer 4 has high adhesion to the insulating film 3 and is harder and denser than the insulating film 3, and thus can have an effect of protecting the surface of the insulating film 3. Therefore, when the surface layer 4 is formed on at least a part of the surface of the insulating film 3, it is possible to suppress damage to the surface of the insulating film 3 and to alleviate an impact from a collision object. In addition, since the surface layer 4 is formed, it is possible to obtain an effect of preventing powder falling of the inorganic material 20 or the like.

### (Thickness of Surface Layer)

In the case where the composite member 1 includes the surface layer 4, when a thickness of the surface layer 4 is 10 µm or more, the effect of protecting the insulating film 3 by the surface layer 4 can be obtained. In addition, when the thickness of the surface layer 4 is 100 µm or less, the size of the composite member 1 is not influenced, and an increase in production cost can be suppressed.

### <Resin Layer>

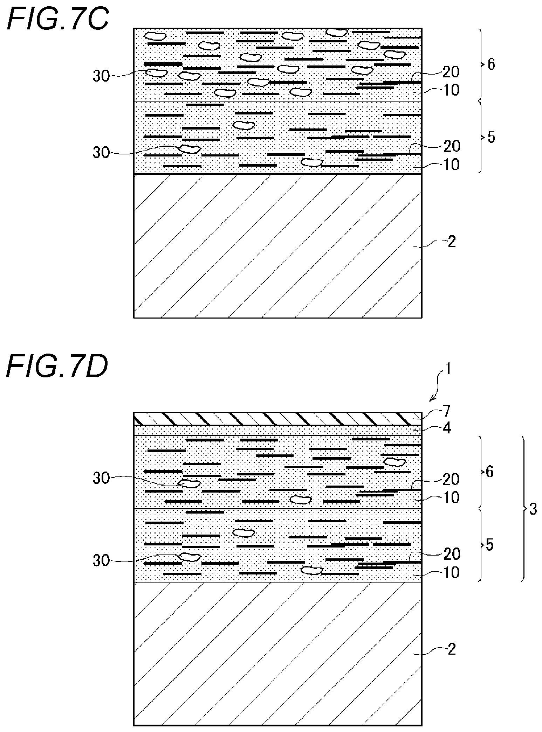

The composite member 1 may include a resin layer 7, shown in Fig. 7D to be described later, containing a resin different from the material of the matrix on at least a part of the surface. As a material of the resin layer 7, an insulating resin can be used, and examples thereof include an epoxy resin, a nylon resin, a styrene-butadiene rubber (SBR), and a silicone rubber. When the composite member 1 includes the resin layer 7, the insulating property and the heat resistance can be further improved. Note that, the resin layer 7 may be formed on the surface of the insulating film 3 or may be formed on the surface layer 4.

### (Thickness of Resin Layer)

In the case where the composite member 1 includes the resin layer, when a thickness of the resin layer is 100 µm or more, the effect of improving the insulating property and the heat resistance can be sufficiently obtained. Therefore, the thickness of the resin layer is preferably 100 µm or more, more preferably 120 µm or more, and still more preferably 150 µm or more. In addition, when the thickness of the resin layer is 600 µm or less, the size of the composite member 1 is not influenced, and an increase in production cost can be suppressed. Therefore, the thickness of the resin layer is preferably 600 µm or less, more preferably 550 µm or less, and still more preferably 500 µm or less.

### [Specific Application Example of Composite Member]

A product to which the composite member 1 is applied is not particularly limited, and the composite member 1 can be applied to, for example, a bus bar used for connecting a plurality of battery cells or battery modules in a power storage device. Hereinafter, a configuration of the composite member 1 will be described using a bus bar as an example.

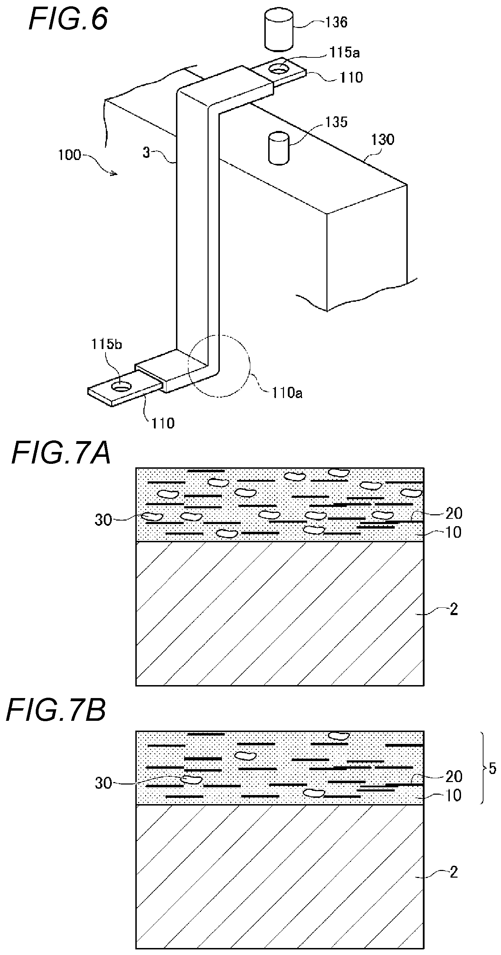

Fig. 6 is a perspective view showing a bus bar to which the composite member according to the present embodiment is applied. Note that, Fig. 6 shows a state immediately before a bus bar (composite member) 100 is attached to a battery cell 130. A bus bar body (substrate) 110 is, for example, a metal plate member having a Z shape as a whole, and is fixed by inserting an electrode 135 of the battery cell 130 into a connection hole 115a at one tip and covering the electrode 135 with a terminal cap 136. Adjacent battery cells (not shown) or external devices (not shown) are connected to a connection hole 115b at the other tip of the bus bar body 110. A region of the bus bar body 110 excluding the connection holes 115a and 115b is covered with the insulating film 3. In this manner, the bus bar 100 is formed.

Note that, although not shown, the bus bar body 110 may have various shapes depending on an installation location of the battery cell 130, such as an I-shape as a whole or an irregular shape having a curved portion.

When the bus bar body 110 has a shape having a bent portion 110a or a curved portion (not shown) such as a Z shape shown in the drawing, the following problems occur. For example, in the method of winding the ceramic tape around the body as in the bus bar disclosed in Patent Literature 1, it takes time and effort to perform the winding operation in order to prevent winding unevenness or a gap from occurring in the bent portion 110a or the curved portion. It is also assumed that a gap is generated between the ceramic tapes due to vibration or the like, or an adhesive between the ceramic tape and the body is peeled off.

In contrast, in the bus bar 100 configured as described above, the insulating property is not imparted by winding a tape around the bus bar body 110, but a surface of the bus bar body 110 is covered with the material (coating liquid) for forming the insulating film 3 to form the insulating film 3 in close contact with the bus bar body 110. Therefore, during the production of the bus bar 100, a winding operation is not required, there is no problems with winding unevenness, a gap, or peeling off, and it is possible to easily cope with even a complicated shape.

Note that, as a method of covering the surface of the bus bar body 110 with the coating liquid, "dip coating" in which the bus bar body 110 is immersed in a coating liquid or coating using a brush or a spray can be used. In the case of using dip coating, since the insulating film 3 is not formed in the connection hole 115a and the connection hole 115b, this region is masked and then the bus bar body 110 is immersed in the coating liquid. In this manner, the insulating film 3 covering at least a part of the surface of the bus bar body 110 can be formed.

In addition to the bus bar, the composite member according to the present embodiment can be applied to a connector, a protective component for a battery module, a case of an electronic component, a battery cell, a battery module, a battery pack, or a coil of a motor.

### [Method for Producing Composite Member]

The composite member shown in Fig. 1 can be produced, for example, by the following production method. Figs. 7A to 7D are schematic diagrams showing a method for producing the composite member according to the embodiment of the present invention in order of steps. Note that, in the following production method, a case where the compound having the siloxane bond contained in the matrix 10 is silicone will be described, and a case where the compound having the siloxane bond is silica sol (silica) can be similarly applied.

### (Application Step: First Time)

As shown in Fig. 7A, first, at least a part of the surface of the substrate 2 is coated with a first coating material (not shown). The first coating material (coating liquid) is, for example, obtained by adding the material of the matrix 10 containing silicone and the inorganic material 20 to an organic solvent.

### (First Coating Material Drying Step: First Time)

After the application step, the first coating material is dried at a temperature of 50°C, for example. In the first coating material drying step, the organic solvent is volatilized.

### (First Coating Material Curing Step: First Time)

Thereafter, the dried first coating material is heated at a temperature of, for example, 200°C to be cured. With the first coating material curing step, the silicone is dehydrated and condensed to form a first layer 5 having a three-dimensional network structure. In addition, a large number of pores 30 are formed in the first layer 5.

### (Immersion Step: First Time)

Thereafter, the substrate 2 on which the first layer 5 is formed is immersed in a second coating material (not shown). The second coating material does not contain the inorganic material 20 and is obtained by adding the material of the matrix 10 containing silicone to an organic solvent. Thereafter, the second coating material is dried at a temperature of, for example, 50°C and then heated at a temperature of, for example, 200°C to be cured. As shown in Fig. 7B, with the immersion step, some of the large number of pores 30 formed in the first layer 5 is filled with the second coating material, and the number of the pores in the first layer 5 is reduced. Note that, the second coating material may not contain the inorganic material 20 in the first coating material, or may be a material different from the material of the matrix 10.

### (Application Step: Second Time)

Thereafter, as shown in Fig. 7C, the first coating material (not shown) is stacked again on a surface of the first layer 5. The first coating material (coating liquid) is the same material as that used in the application step for the first time. At this time, some of the pores 30 remaining in the first layer 5 is also filled with the first coating material.

### (First Coating Material Drying Step: Second Time)

After the application step, the first coating material is dried at a temperature of 50°C, for example. With the first coating material drying step for the second time, the organic solvent in the first coating material for covering in the application step for the second time is volatilized.

### (First Coating Material Curing Step: Second Time)

Thereafter, the dried first coating material is heated at a temperature of, for example, 200°C to be cured. With the first coating material curing step for the second time, the silicone is dehydrated and condensed to form a second layer 6 having a three-dimensional network structure. In addition, a large number of pores 30 are formed in the second layer 6.

### (Immersion Step: Second Time)

Thereafter, as shown in Fig. 7D, the substrate 2 on which the second layer 6 is formed is immersed in the second coating material (not shown). The second coating material is the same material as that used in the immersion step for the first time. Thereafter, the second coating material is dried at a temperature of, for example, 50°C and then heated at a temperature of, for example, 200°C to be cured. With the immersion step, some of the large number of pores 30 formed in the second layer 6 is filled with the second coating material, and the number of the pores in the second layer 6 is reduced. Note that, the second coating material in the immersion step for the second time may not contain the inorganic material 20 in the first coating material, or may be a material different from the material of the matrix 10.

In addition, an immersion time in the immersion step for the second time may be the same as an immersion time for the first time, or may be longer than the immersion time for the first time. The second coating material penetrates the second layer 6 from a surface of the second layer 6, but when the second coating material remains on the surface of the second layer 6 due to the immersion for a long time, the second coating material is cured as it is, and the surface layer 4 is formed on the surface of the second layer 6. The surface layer 4 is formed from the second coating material remaining on the surface, and thus has a dense structure not containing the inorganic material 20.

### (Resin Layer Forming Step)

Thereafter, on the surface layer 4, for example, an epoxy resin coating material is applied by electrostatic powder coating or fluid immersion coating to form the resin layer 7. In the case of forming the resin layer 7, the material constituting the resin layer 7 may penetrate the insulating film 3.

The production method shown in Figs. 7A to 7D is an example, and the production method is not particularly limited as long as an adhesive layer is formed between the substrate 2 and the insulating film 3 or a composite member having an adhesive layer in advance is formed in the case where the composite member is heated to a temperature equal to or higher than the oxidation start temperature of the metal constituting the substrate 2. For example, the second coating material immersion step for the first time, the first coating material application step for the second time, and the second coating material immersion step for the second time may be omitted. In addition, the application step and the immersion step may be repeated three times or more. Although not shown, an adhesive layer may be formed between the substrate 2 and the insulating film 3 at this time.

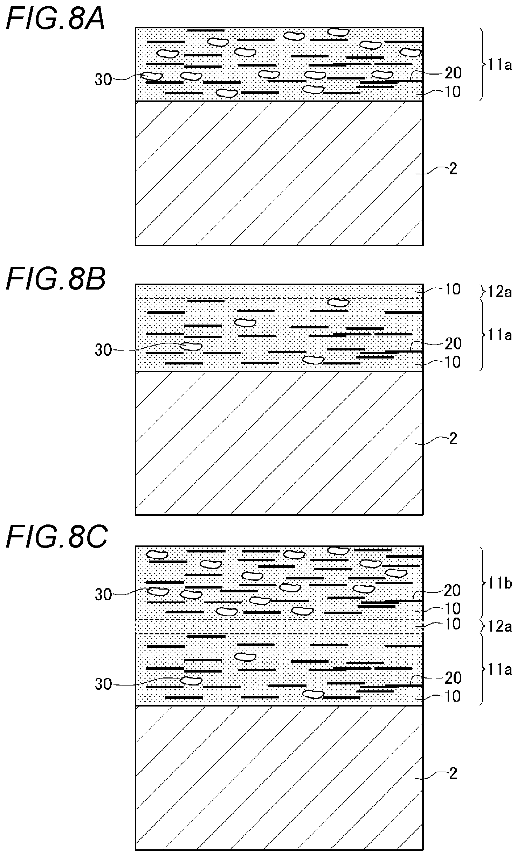

Further, the composite member having a structure shown in Fig. 5 can be produced by, for example, the following production method. Figs. 8A to 8D are schematic diagrams showing a method for producing a composite member according to another embodiment of the present invention in order of steps. In Figs. 8A to 8D, the same components as those shown in Figs. 7A to 7D are denoted by the same reference numerals, and detailed description thereof will be omitted or simplified. However, in Figs. 8A to 8D, for ease of description, the first layer of first film and the third layer of first film are distinguished from each other by reference numerals by counting in the order of stacking from the substrate 2. In addition, the second layer of second film and the fourth layer of second film are distinguished from each other by reference numerals.

### <Formation of First Layer>

### (Application Step: First Time)

As shown in Fig. 8A, first, at least a part of the surface of the substrate 2 is coated with a material for a first film (first coating material not shown).

### (First Coating Material Drying Step: First Time)

After the application step, the first coating material is dried at a temperature of 50°C, for example. In the first coating material drying step, the organic solvent is volatilized.

### (First Coating Material Curing Step: First Time)

Thereafter, the dried first coating material is heated at a temperature of, for example, 200°C to be cured. With the first coating material curing step, the silicone is dehydrated and condensed to form a first film 11a having a three-dimensional network structure. At this time, a large number of pores 30 are formed in the first film 11a.

### <Formation of Second Layer>

### (Immersion Step: First Time)

Thereafter, the substrate 2 on which the first film 11a is formed is immersed in a material for a second film (second coating material not shown). The second coating material does not contain the inorganic material 20 and is obtained by adding the material of the matrix 10 containing silicone to an organic solvent. As shown in Fig. 8B, with the immersion step, some of the large number of pores 30 formed in the first film 11a is filled with the second coating material, and the number of the pores in the first film 11a is reduced. In addition, the excess second coating material that has not been absorbed by the pores 30 remains on a surface of the first film 11a. Thereafter, the second coating material is dried at a temperature of, for example, 50°C and then heated at a temperature of, for example, 200°C to be cured. Accordingly, a second film 12a consisting of the material of the matrix 10 containing silicone is formed on the surface of the first film 11a. The obtained second film 12a is formed from the second coating material remaining on the surface, and thus has a dense structure not containing the inorganic material 20.

### <Formation of Third Layer>

### (Application Step: Second Time)

Thereafter, as shown in Fig. 8C, the first coating material is stacked again on a surface of the second film 12a. This first coating material is the same material as that used in the application Step for the first time.

### (First Coating Material Drying Step: Second Time)

After the application Step for the second time, the first coating material is dried at a temperature of 50°C, for example. With the first coating material drying step for the second time, the organic solvent in the applied first coating material in the application step for the second time is volatilized.

### (First Coating Material Curing Step: Second Time)

Thereafter, the dried first coating material is heated at a temperature of, for example, 200°C to be cured. With the first coating material curing step for the second time, the silicone is dehydrated and condensed to stack a first film 11b having a three-dimensional network structure. At this time, a large number of pores 30 are formed in the first film 11b.

### <Formation of Fourth Layer>

### (Immersion Step: Second Time)

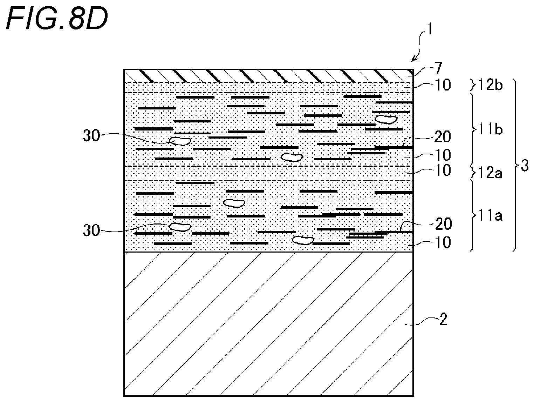

Thereafter, as shown in Fig. 8D, the substrate 2 on which the first film 11b is formed is immersed in the second coating material. The second coating material is the same material as that used in the immersion step for the first time. With the immersion step for the second time, some of the large number of pores 30 formed in the first film 11b is filled with the second coating material, and the number of the pores in the first film 11b is reduced. In addition, the second coating material that has not been absorbed by the pores 30 remains on a surface of the first film 11b. Thereafter, the second coating material is dried at a temperature of, for example, 50°C and then heated at a temperature of, for example, 200°C to be cured. Accordingly, a second film 12b (surface layer) consisting of the material of the matrix 10 containing silicone is formed on the surface of the first film 11b. Similar to the second film 12a, the second film 12b consists of the second coating material not containing the inorganic material 20, and thus contains only the material of the matrix and has a dense structure. Therefore, since the second films 12a and 12b are included in the insulating film 3, the insulating property can be further improved.

Note that, whether the second film 12a is formed is determined by conditions such as the immersion time when the substrate 2 on which the first film 11a is formed is immersed in the second coating material. In the above production method, the immersion conditions in the immersion step for the first time and the immersion step for the second time are not particularly limited. When it is desired to form the second films 12a and 12b, it is preferable to adjust the immersion conditions such that the excess second coating material remains on the surfaces of the first films 11a and 11b to form the second films 12a and 12b.

The resin layer 7 may or may not be formed, and the formation method is as described above.

Note that, in the above production method, the series of steps from the application Step to the immersion step is repeated twice, but may be repeated a plurality of times until a desired thickness is obtained. In the case where the series of steps is repeated three times or more, the number of layers of the second film consisting of the second coating material increases, so that the insulating film 3 having a higher insulating property can be formed.

In addition, in the above production method, the first coating material (coating liquid) is obtained by adding the material of the matrix 10 containing silicone and the inorganic material 20 to the organic solvent, and the second coating material (coating liquid) does not contain the inorganic material 20 and is obtained by adding the material of the matrix 10 containing silicone to the organic solvent, but the composite member according to the present invention can be obtained without performing the immersion step depending on the kinds of the first coating material and the second coating material, for example, in the case of silica sol (silica).

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-170685) filed on September 29, 2023, and the contents thereof are incorporated herein by reference.

### REFERENCE SIGNS LIST

1 composite member
2 substrate
3 insulating film
4 surface layer
5 first layer
6 second layer
7 resin layer
8 adhesive layer
10 matrix
11, 11a, 11b first film
12, 12a, 12b second film
20 inorganic material
30 pore
100 bus bar
110 bus bar body
110a bent portion
130 battery cell

## Claims

1. A composite member comprising:
a metal substrate; and
an insulating film covering at least a part of a surface of the substrate, wherein
the insulating film contains a matrix containing a compound having a siloxane bond and an inorganic material dispersed in the matrix,
the substrate and the insulating film are in contact with each other at room temperature,
an adhesive layer is formed between the substrate and the insulating film in a case of performing heating to a temperature equal to or higher than an oxidation start temperature of the metal constituting the substrate, and
the adhesive layer contains a metal element contained in the substrate, a metal oxide of the metal element, the inorganic material, and at least one kind selected from silicone and silica.

2. A composite member comprising:
a metal substrate;
an insulating film covering at least a part of a surface of the substrate; and
an adhesive layer formed between the substrate and the insulating film, wherein
the insulating film contains a matrix containing a compound having a siloxane bond and an inorganic material dispersed in the matrix, and
the adhesive layer contains a metal element contained in the substrate, a metal oxide of the metal element, the inorganic material, and at least one kind selected from silicone and silica.

3. The composite member according to claim 1 or 2, wherein the insulating film has a pore that communicates an outside with the surface of the substrate.

4. The composite member according to claim 1 or 2, wherein the insulating film has a thickness of 150 µm or more.

5. The composite member according to claim 1 or 2, wherein a surface layer consisting of a material of the matrix is provided on at least a part of a surface of the insulating film.

6. The composite member according to claim 5, wherein the surface layer has a thickness of 10 µm or more and 100 µm or less.

7. The composite member according to claim 1 or 2, wherein
the insulating film includes a first film containing the matrix and the inorganic material and a second film consisting of a material of the matrix, and
a plurality of the first films and a plurality of the second films are alternately stacked in this order from a substrate side.

8. The composite member according to claim 7, wherein each of the second films has a thickness of 10 µm or more and 100 µm or less.

9. The composite member according to claim 1 or 2, wherein a resin layer containing a resin different from a material of the matrix is provided on at least a part of a surface of the insulating film.

10. The composite member according to claim 9, wherein the resin layer has a thickness of 100 µm or more and 600 µm or less.

11. The composite member according to claim 1 or 2, wherein the compound having the siloxane bond is at least one of silicone and silica sol.

12. The composite member according to claim 1 or 2, wherein the inorganic material includes at least one kind selected from silica, alumina, mullite, and zirconia.

13. The composite member according to claim 1 or 2, wherein the inorganic material includes at least one kind selected from a glass-based material, mica, kaolin, talc, clay, pyrophyllite, montmorillonite, bentonite, wollastonite, xonotlite, zeolite, diatomaceous earth, and halloysite.

14. The composite member according to claim 13, wherein the adhesive layer contains 18 mass% or more and 22 mass% or less of oxygen, 5 mass% or less of magnesium, 5 mass% or less of aluminum, 8 mass% or more and 12 mass% or less of silicon, 5 mass% or less of potassium, and 50 mass% or more and 70 mass% or less of copper.

15. The composite member according to claim 1 or 2, wherein the inorganic material includes at least one kind selected from a flaky inorganic material, a fibrous inorganic material, and a particulate inorganic material.

16. The composite member according to claim 1 or 2, wherein the inorganic material includes at least one of a flaky glass-based material and mica.

17. The composite member according to claim 1 or 2, wherein the substrate is a bus bar that connects a plurality of battery cells or battery modules.

18. The composite member according to claim 1 or 2, wherein the substrate is a connector, a protective component for a battery module, a case of an electronic component, a battery cell, a battery module, a battery pack, or a coil of a motor.
